# FASCICULE DE BREVET EUROPEEN

(11) **EP 3 499 317 B1**
(45) Date de publication et mention de la délivrance du brevet: **21.08.2024**
(21) Numéro de dépôt: 17207013.8
(22) Date de dépôt: 13.12.2017
(51) Int. Cl.: G04B 13/02, G04B 19/247

(54) **MOBILE DE CALENDRIER HORLOGER**
TRIEBFEDER EINES KALENDER-UHRWERKSMECHANISMUS
TIMEPIECE CALENDAR MOBILE

(43) Date de publication de la demande: 19.06.2019
(73) Titulaire: ROLEX SA, 1211 Genève 26 (CH)
(72) Inventeur: Calame, Florian, 1066 Epalinges (CH); Charbon, Christophe, 1211 Genève 26 (CH); Lemosquet, Vincent, 74890 Bons-en-Chablais (FR); Quennoz, Alexandra, 1211 Genève 26 (CH)
(74) Mandataire: Moinas & Savoye SARL

(56) Documents cités:
- EP-A1- 1 596 261
- EP-A1- 2 631 721
- EP-A2- 2 613 205
- WO-A1-2017/042456
- CH-A2- 704 289
- CH-A2- 707 504
- FR-A- 1 448 971
- US-A- 3 620 005

## Description

L'invention concerne un mobile d'indication d'une information horaire ou dérivée de l'heure. L'invention concerne aussi un système horloger comprenant un tel mobile. L'invention concerne encore une pièce d'horlogerie comprenant un tel système ou un tel mobile.

L'invention se rapporte notamment à un mécanisme de calendrier, et plus particulièrement à un mobile de calendrier ou à un mobile des quantièmes. Un tel mobile prend généralement la forme d'un disque pourvu d'une denture de façon à être entraîné d'au moins un pas par un mobile d'entraînement lui délivrant une impulsion ponctuelle à minuit, et ce de façon à faire afficher le quantième du jour. Dans le cas d'un mécanisme de calendrier simple, un tel disque est prévu pour être entraîné d'un seul pas, de manière ponctuelle, par un mobile entraîneur. Ce disque est généralement plan ou sensiblement plan, et fait en un alliage à base de cuivre ou de zinc comme le chrysocale ou le maillechort. Dans le cas d'un mécanisme de calendrier annuel, semi-perpétuel ou perpétuel, le mobile de calendrier est aussi prévu pour être entraîné d'au moins deux pas, de manière ponctuelle, selon le quantième. Un tel mobile présente de fait une conformation plus complexe. Il peut, par exemple, présenter au moins deux dentures distinctes réparties ou non sur un même disque de calendrier, et peut donc présenter un volume et/ou une section plus conséquents que ceux d'un mobile de calendrier conventionnel.

L'art antérieur fait état de disques pour calendrier annuel réalisés dans des alliages d'aluminium choisis pour leur faible densité. De tels disques sont par ailleurs revêtus ou anodisés ou eloxés de façon à ce que leurs dentures présentent une dureté adéquate afin de ne pas être marquées par le mobile entraîneur. Au vu des pressions de contact se produisant entre la ou les dentures du disque et le ou les mobiles entraîneurs, il existe néanmoins un risque de délamination du revêtement du disque, et donc une apparition de pollution au sein du mouvement. Par ailleurs, l'oxyde d'aluminium issu du traitement du disque risque de marquer, voire de marquer sensiblement, le ou les mobiles entraîneurs et risque ainsi de dégrader les caractéristiques du ou des mobiles entraîneurs permettant un fonctionnement optimal du mécanisme de calendrier.

Le brevet CH322341 divulgue un mécanisme de calendrier simple. Celui-ci comporte un disque de calendrier ou disque des quantièmes pourvu d'une denture intérieure de façon à être entraîné d'un pas par un mobile d'entraînement muni d'un doigt entraîneur lui délivrant, tous les jours, une impulsion ponctuelle à minuit.

La demande de brevet EP1785783 divulgue, quant à elle, un mécanisme de calendrier annuel doté d'un disque des quantièmes pourvu de trois dentures distinctes, étagées sur trois niveaux, dont deux dentures sont prévues pour être entraînées par des mobiles entraîneurs.

La demande de brevet EP1596261 divulgue un mobile des quantièmes d'un calendrier annuel comportant un disque des quantièmes sur lequel pivote un satellite muni d'une denture additionnelle d'entraînement dudit mobile.

Le document WO2017/042456A1 décrit une montre ayant un système d'affichage à disques rotatifs.

Le but de l'invention est de fournir un mobile d'indication d'une information horaire ou dérivée de l'heure permettant de remédier aux inconvénients mentionnés précédemment et d'améliorer les dispositifs connus de l'art antérieur. En particulier, l'invention propose un mobile d'indication d'une information horaire ou dérivée de l'heure fiable et robuste.

Un mobile selon l'invention est défini par la revendication 1.

Différents modes de réalisation d'un mobile sont définis par les revendications dépendantes 2 à 11.

Un système horloger selon l'invention est défini par la revendication 12.

Un mode de réalisation d'un système horloger est défini par la revendication dépendante 13.

Un mouvement horloger selon l'invention est défini par la revendication 14.

Une pièce d'horlogerie selon l'invention est définie par la revendication 15.

Les figures annexées représentent, à titre d'exemples, deux modes de réalisation d'une pièce d'horlogerie selon l'invention.
La figure 1 est une vue schématique d'un premier mode de réalisation d'une pièce d'horlogerie.
La figure 2 est une vue d'un mécanisme d'entraînement d'un mobile d'indication d'une information horaire ou dérivée de l'heure du premier mode de réalisation de la pièce d'horlogerie.
Les figures 3 et 4 sont des vues de détail d'une couronne du mobile d'indication d'une information horaire ou dérivée de l'heure du premier mode de réalisation.
La figure 5 est une vue d'un mobile d'indication d'une information horaire ou dérivée de l'heure selon un deuxième mode de réalisation.

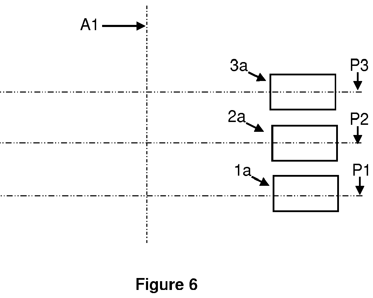

La figure 6 est une vue schématique illustrant l'étagement de différentes dentures d'un mobile d'indication d'une information horaire ou dérivée de l'heure de l'un ou l'autre des premier et deuxième modes de réalisation.

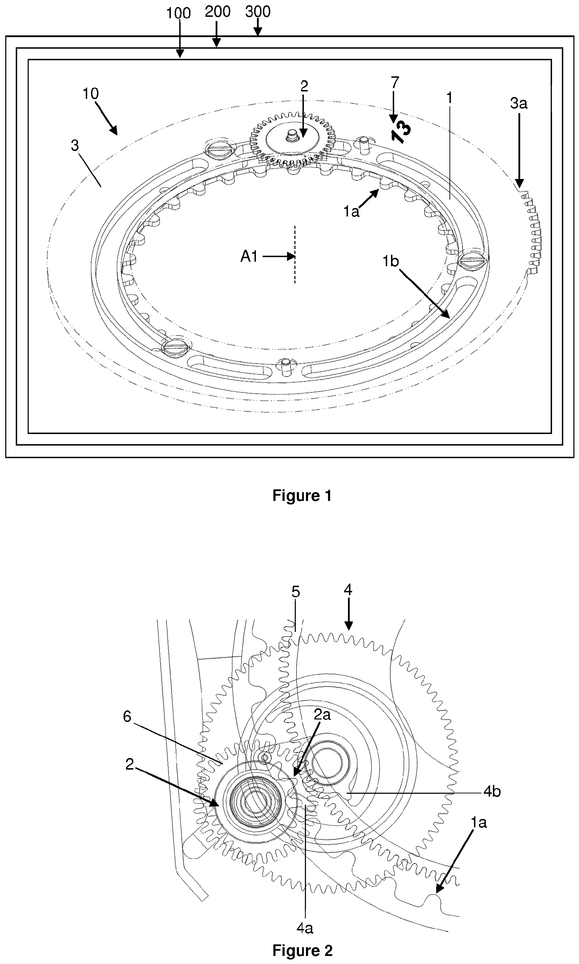

Un premier mode de réalisation d'une pièce d'horlogerie 300 est décrit ci-après en référence aux figures 1 à 4. La pièce d'horlogerie est par exemple une montre, en particulier une montre bracelet. La pièce d'horlogerie comprend un mouvement horloger 200. Le mouvement horloger est de préférence un mouvement horloger de type mécanique. Alternativement, le mouvement horloger peut être de type électronique.

Le mouvement horloger comprend un système 100 d'affichage ou d'indication d'une information horaire ou dérivée de l'heure. Le système horloger est par exemple un calendrier horloger, notamment un calendrier affichant les quantièmes et/ou les jours et/ou les mois. Le calendrier peut être un calendrier du type à quantième simple ou du type à quantième annuel ou du type à quantième semi-perpétuel ou du type à quantième perpétuel. Le système 100 peut, par exemple, être un mécanisme 100 de calendrier annuel tel que celui décrit au sein de la demande de brevet EP1596261.

Le mobile 10 d'indication d'une information horaire ou dérivée de l'heure, comprend au moins un élément d'obstacle 1a, 2a, 3a destiné à recevoir une action de contact d'entraînement du mobile et/ou destiné à recevoir une action de contact d'indexation du mobile et/ou destiné à transmettre une action de contact d'entraînement du mobile à un autre élément. Le mobile peut donc être mené et/ou menant via un ou plusieurs éléments d'obstacle. Un élément d'obstacle ou au moins certains éléments d'obstacle sont en titane ou en alliage de titane. Un élément d'obstacle ou au moins certains éléments d'obstacle sont par exemple en alliage de titane « grade 2 » ou en alliage de titane « grade 5 ».

Dans le premier mode de réalisation, le mobile 10 d'indication d'une information horaire ou dérivée de l'heure a la forme d'un disque ou le mobile a sensiblement la forme d'un disque ou le mobile a sensiblement la forme d'une couronne d'un disque, c'est-à-dire une portion annulaire de disque. Le mobile 10 comprend une couronne 1 et un support 3 faisant ici office d'organe d'affichage des quantièmes par le biais d'indicateurs ou indications 7. Ces indicateurs sont par exemple des caractères numériques ou alphabétiques.

Par « couronne », nous entendons un composant de forme circulaire ou annulaire ou sensiblement circulaire ou annulaire.

Le mobile est doté d'un axe A1 de rotation. De préférence, cet axe A1 de rotation coïncide avec l'axe de symétrie global du mobile.

Dans le premier mode de réalisation, le support 3 est rapporté et positionné sur la couronne 1 par le biais de goupilles, et fixé sur la couronne 1 par le biais de vis. Alternativement, le support 3 pourrait, par exemple, être rapporté sur la couronne 1 par des rivets ou tout autre moyen de fixation approprié.

Des conformations 1b, notamment des évidements 1b, peuvent être prévues sur la couronne de façon à permettre un ajustement fin de l'inertie du mobile pour une géométrie donnée du mobile.

Dans ce premier mode de réalisation, la couronne 1 comprend un premier élément d'obstacle, c'est-à-dire que le premier élément d'obstacle est formé par une portion ou une partie de la couronne. Cet élément d'obstacle comprend ou est une première denture 1a, notamment une première denture d'au moins 7 dents, en particulier une première denture de 12 dents ou de 14 dents ou de 31 dents et/ou une première denture prévue pour coopérer avec un premier doigt entraîneur 4a toutes les heures, voire toutes les 24 heures. Dans le premier mode de réalisation, la première denture 1a comporte 31 dents pour permettre le passage des 31 quantièmes d'un mois. La première denture 1a est prévue pour coopérer par contact, avec un premier doigt entraîneur 4a d'un mobile 4 entraîneur comme représenté sur la figure 2. Le premier doigt entraîneur ne fait pas partie du mobile. Par contre, le premier doigt entraîneur fait avantageusement partie du système 100.

Une denture de 7 dents ou de 14 dents est particulièrement indiquée pour un mobile d'indication des jours. Une denture de 12 dents est particulièrement indiquée pour un mobile d'indication des heures sautantes. Une denture de 31 dents est particulièrement indiquée pour un mobile d'indication des quantièmes.

L'instantanéité du ou des sauts de calendrier peut être garantie par une énergie restituée par un dispositif comportant, par exemple, une came prenant part au mobile 4 et une bascule-ressort.

Le premier doigt 4a est préférentiellement réalisé en acier, notamment en un acier de décolletage comme un acier Finemac ou un acier martensitique durci, comme un acier maraging.

Des essais réalisés par la titulaire montrent que pour une même géométrie de mobile 10 et pour une même géométrie de denture 1a, une denture 1a en titane ou en alliage de titane présente une excellente tenue au vieillissement en regard d'une denture en alliage d'aluminium. Plus particulièrement, une denture 1a en titane ou en alliage de titane ne présente pas de marque perceptible au vieillissement, et ne marque pas le premier doigt 4a. Par « absence de marque », nous entendons que l'intégrité du composant n'est pas modifiée, en particulier l'intégrité géométrique du composant. Par ailleurs, la denture 1a en titane ou en alliage de titane présente un relargage de particules négligeable, voire nul. En particulier, la denture 1a ne dépose pas de pollution perceptible sur le premier doigt 4a.

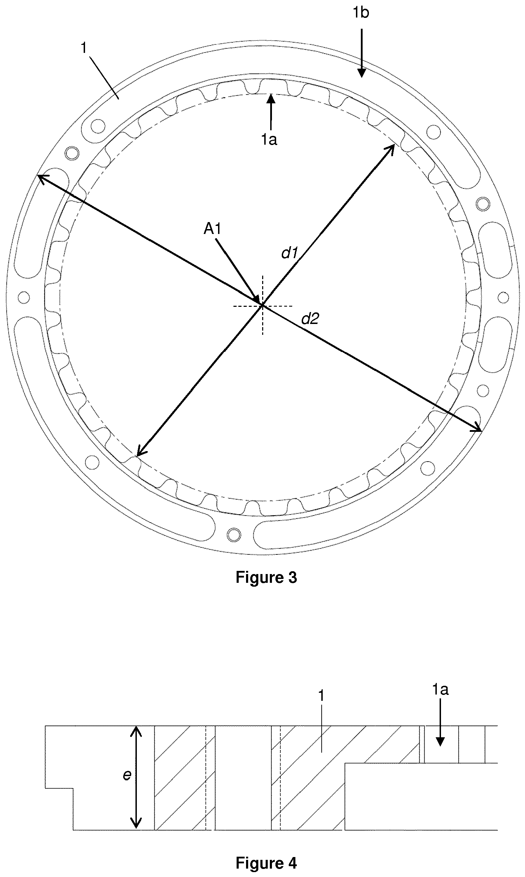

Préférentiellement, comme représentée sur la figure 3, la couronne 1 présente un diamètre intérieur d1, défini comme le diamètre de tête de la denture 1a, supérieur à 10 mm, voire supérieur à 12 mm, voire supérieur à 14 mm.

Préférentiellement, la couronne 1 présente un diamètre extérieur d2 inférieur à 30 mm, voire inférieur à 25 mm, voire inférieur à 20 mm.

Préférentiellement, comme représentée sur la figure 4, la couronne 1 présente une épaisseur e maximale inférieure à 1 mm, voire inférieure à 0.9 mm, voire inférieure à 0.8 mm.

Préférentiellement, la couronne 1 présente une épaisseur e maximale supérieure à 0.1 mm, voire supérieure à 0.15 mm, voire supérieure à 0.2 mm.

Préférentiellement, la couronne 1 présente un volume v inférieur à 45 mm³, voire inférieur à 40 mm³, voire inférieur à 35 mm³. Préférentiellement, la couronne 1 présente un volume v supérieur à 20 mm³, voire supérieur à 30 mm³.

Dans le premier mode de réalisation représenté, la denture 1a est intérieure. Les têtes des dents de la denture 1a sont disposées sur le diamètre intérieur d1 de la couronne 1, et les têtes des dents de la denture 1a sont notamment orientées en direction de l'axe A1. Alternativement, la denture 1a peut être extérieure.

Le mobile 10 comprend encore un deuxième élément d'obstacle. Cet élément d'obstacle comprend ou est une deuxième denture 2a, notamment une deuxième denture d'une dent ou de quatre dents (dans le cas où le mois de février n'est pas pris en considération dans la programmation du calendrier) ou de cinq dents (dans le cas notamment où le mois de février est pris en considération dans la programmation du calendrier). De préférence, la deuxième denture est prévue pour coopérer, notamment par contact, avec un deuxième doigt entraîneur 4b à la fin d'au moins certains mois de moins de 31 jours. La deuxième denture 2a peut comporter cinq dents, ces cinq dents correspondant au nombre de mois dans l'année de moins de 31 jours. Dans le premier mode de réalisation, la deuxième denture 2a comprend quatre dents comme représenté sur la figure 2.

Le mobile 10 comprend par exemple, comme deuxième élément d'obstacle, une deuxième denture 2a d'un mobile satellite 2, la deuxième denture étant formée sur une portion ou sur une partie du mobile satellite, en particulier sur une portion ou sur une partie d'un composant prenant part au mobile satellite. Le mobile satellite est avantageusement pivoté sur la couronne 1 et/ou sur le support 3.

Dans le premier mode de réalisation, la deuxième denture 2a est déplaçable, notamment déplaçable en rotation, relativement au mobile 10, et en particulier déplaçable, notamment déplaçable en rotation, relativement à la couronne 1. Dans le premier mode de réalisation, la deuxième denture 2a est disposée de sorte à être entraînée en rotation par une roue 5 fixe relativement au bâti du calendrier et en prise avec un pignon 6 du mobile satellite 2.

Le deuxième doigt entraîneur ne fait pas partie du mobile. Par contre, le deuxième doigt entraîneur fait avantageusement partie du système 100.

Alternativement, la deuxième denture 2a peut se présenter sous la forme d'une denture escamotable, notamment d'une dent escamotable, dont la position peut être pilotée par une came de commande. Par denture « escamotable », nous entendons une denture mobile relativement au mobile, et notamment relativement à la couronne, notamment une denture mobile en rotation et/ou en translation sur une plage angulaire et/ou une distance donnée. La deuxième denture peut, par exemple, se présenter sous la forme d'un levier mobile, notamment pivoté sur la couronne 1, dont un bec constitue une dent. A la fin d'un mois de moins de 31 jours, la denture, notamment la dent, pourra être actionnée par le deuxième doigt entraîneur du mobile entraîneur. Ainsi, il est possible d'entraîner de deux pas le mobile des quantièmes à la fin d'un mois de 30 jours pour provoquer un passage du quantième « 30 » au quantième « 1 ».

Alternativement encore, la deuxième denture peut être fixe relativement au mobile. La denture peut notamment se présenter sous la forme d'une unique dent. Dans ce cas de figure, la deuxième denture peut être venue de matière avec la couronne ou être monobloc avec la couronne. Dans ce cas de figure, la couronne comprend les premier et deuxième éléments d'obstacle, les premier et deuxième éléments d'obstacle étant formés chacun par une portion ou une partie de la couronne. Avantageusement, la couronne peut être réalisée d'un seul tenant en titane ou en alliage de titane, notamment en alliage de titane « grade 2 » ou en alliage de titane « grade 5 ».

A la fin d'un mois de moins de 31 jours, la deuxième denture peut être actionnée par un doigt entraîneur d'un mobile additionnel, dont la position relativement au bâti du calendrier est pilotée par le biais d'une came connexe. A l'instar des autres doigts évoqués précédemment, ce doigt entraîneur est préférentiellement réalisé en acier, notamment en un acier de décolletage comme un acier Finemac ou un acier martensitique durci comme un acier maraging.

A l'instar de la denture 1a, la denture 2a peut se présenter sous la forme d'une denture extérieure ou sous la forme d'une denture intérieure.

A l'instar de la denture 1a, la denture 2a peut être faite en titane ou en un alliage de titane. A l'instar du premier doigt 4a, le deuxième doigt 4b est préférentiellement réalisé en acier, notamment en un acier de décolletage comme un acier Finemac ou un acier martensitique durci comme un acier maraging.

Ainsi, selon les variantes, la deuxième denture est fixe relativement au reste du mobile ou la deuxième denture est déplaçable par rapport au reste du mobile, notamment déplaçable en rotation par rapport au reste du mobile ou déplaçable par rapport au reste du mobile de sorte à pouvoir être escamotée.

Dans le premier mode de réalisation, le mobile comprend encore un troisième élément d'obstacle. Cet élément d'obstacle comprend une troisième denture 3a, notamment une troisième denture prévue pour entraîner un indicateur et/ou une came des mois.

La troisième denture 3a est par exemple disposée sur le support 3. Préférentiellement, la denture 3a est venue de matière avec le support 3. Le troisième élément d'obstacle est par exemple formé par une portion ou une partie du support. Le support 3 peut également être réalisé d'un seul tenant en titane ou en alliage de titane, notamment en alliage de titane « grade 2 » ou en alliage de titane « grade 5 ».

Alternativement, la troisième denture peut être disposée sur la couronne. Dans ce cas de figure, la couronne comprend les premier, deuxième et troisième éléments d'obstacle. Chacun des premier, deuxième et troisième éléments d'obstacle est alors formé par une portion ou une partie de la couronne. Dans ce cas de figure, la denture 3a peut être venue de matière avec la couronne. La couronne peut alors être réalisée d'un seul tenant en titane ou en alliage de titane, notamment en alliage de titane « grade 2 » ou en alliage de titane « grade 5 ».

Avantageusement, la troisième denture est agencée de sorte qu'à la fin d'un mois donné ou dans le courant d'un mois donné, elle puisse actionner un indicateur des mois et/ou une came des mois. A l'instar des première et deuxième dentures 1a et 2a, la troisième denture 3a peut se présenter sous la forme d'une denture extérieure ou sous la forme d'une denture intérieure.

Comme vu précédemment, chaque élément d'obstacle peut respectivement comprendre une denture 1a, 2a, 3a. Ces éléments d'obstacle peuvent être disposés sur plusieurs niveaux, c'est-à-dire selon plusieurs plans P1, P2, P3 parallèles entre eux et perpendiculaires relativement à l'axe A1 de rotation du mobile. Notamment, le premier élément d'obstacle peut intersecter le plan P1 sans intersecter les plans P2 et P3. Le deuxième élément d'obstacle peut intersecter le plan P2 sans intersecter les plans P1 et P3. Le troisième élément d'obstacle peut intersecter le plan P3 sans intersecter les plans P1 et P2. Alternativement, deux éléments d'obstacle peuvent se trouver sur un même niveau et/ou intersecter un même plan. Dans ce cas de figure, un premier élément d'obstacle peut notamment se présenter sous la forme d'une denture intérieure, tandis qu'un deuxième élément d'obstacle peut notamment se présenter sous la forme d'une denture extérieure.

Préférentiellement, le mobile 10 présente au moins deux niveaux distincts pour faire cohabiter les premier et deuxième éléments d'obstacle 1a, 2a, en particulier les première et deuxième dentures 1a, 2a. Dans le premier mode de réalisation, les dentures 1a, 2a, 3a sont réparties sur trois niveaux distincts. Dans le cas d'une couronne 1 supportant au moins les dentures 1a, 2a, celle-ci présente préférentiellement au moins deux niveaux distincts sur lesquels les première et deuxième dentures sont réparties.

Le mobile 10 peut être au moins partiellement lubrifié et/ou au moins partiellement revêtu de façon à mettre en oeuvre au moins les fonctions de guidage de la denture 2a, notamment les fonctions de pivotement de la denture 2a. En particulier, la couronne 1 peut être au moins partiellement lubrifiée ou au moins partiellement revêtue de façon à mettre en oeuvre au moins les fonctions de guidage de l'élément d'obstacle 2a, notamment les fonctions de pivotement de l'élément d'obstacle 2a. Le mobile 10 peut être au moins partiellement lubrifié et/ou au moins partiellement revêtu de façon à mettre en oeuvre au moins les fonctions de guidage du mobile 10, notamment les fonctions de pivotement de la couronne 1. En particulier, la couronne 1 peut être au moins partiellement lubrifiée ou au moins partiellement revêtue de façon à mettre en oeuvre au moins les fonctions de guidage du mobile 10, notamment les fonctions de pivotement de la couronne 1. Un tel revêtement peut, par exemple, comporter du PTFE. Ainsi, le mobile comprend une portion de guidage, notamment une portion de guidage en rotation du mobile, cette portion étant revêtue d'un matériau anti-friction, notamment un lubrifiant et/ou un revêtement comme du PTFE.

Les composants prenant part au mobile 10 peuvent être fabriqués par usinage, notamment par décolletage. Alternativement, un composant du mobile 10, notamment une couronne 1, en titane, notamment en alliage de titane « grade 2 » ou en alliage de titane « grade 5 », peut être fabriqué par découpe laser et/ou jet d'eau. Un tel procédé de fabrication permet d'obtenir une rugosité de surface des dents 1a parfaitement adaptée à la fonction d'engrènement.

Dans le cas d'un mobile de quantième de calendrier ou d'un mobile d'affichage des jours, le contact entre le premier doigt 4a et la première denture 1a intervient toutes les 24 heures en fonctionnement conventionnel du mécanisme de calendrier. Ainsi, les exigences tribologiques d'un tel mobile ne requiert pas un revêtement des portions fonctionnelles faites en titane ou en alliage de titane.

Bien entendu, un tel mobile 10 peut être mis en oeuvre pour tout mécanisme d'affichage de l'heure ou d'une indication dérivée de l'heure. A titre d'exemple, un tel mobile peut être mis en oeuvre au sein d'un mécanisme à « heures sautantes », de façon à faire afficher les heures.

Dans ce cas de figure, le contact d'un dispositif entraîneur avec le mobile est là aussi ponctuel et n'intervient que toutes les heures. Ainsi, les exigences tribologiques d'un tel mobile ne requièrent pas un revêtement des portions fonctionnelles faites en titane ou en alliage de titane.

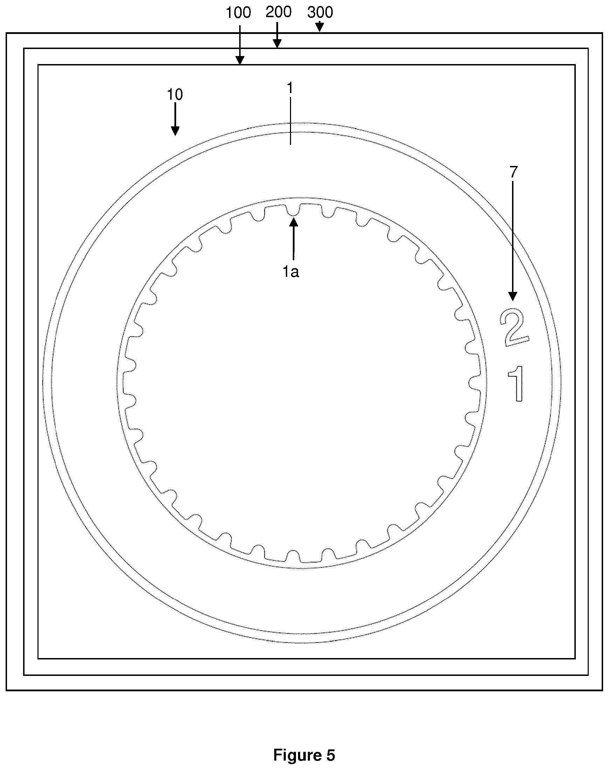

Dans un deuxième mode de réalisation de pièce d'horlogerie 300 représenté sur la figure 5, une première denture 1a, constituant un premier élément d'obstacle, peut être venue de matière avec le reste du mobile, c'est-à-dire que la couronne et le support sont monoblocs ou sont venus de matière l'un avec l'autre. Ainsi, le mobile peut être un disque. Il peut être réalisé d'un seul tenant en titane ou en alliage de titane, notamment en alliage de titane « grade 2 » ou en alliage de titane « grade 5 ». Des conformations, notamment des évidements, peuvent être prévues sur le mobile de façon à permettre un ajustement fin de l'inertie du mobile pour une géométrie donnée du mobile.

Dans les modes de réalisation décrits, la première denture est une denture intérieure. Alternativement, dans un autre mode de réalisation, la première denture peut être extérieure. Dans ce cas, les têtes des dents de la denture 1a sont disposées sur le diamètre extérieur d2 de la couronne 1. La deuxième denture peut également être intérieure ou extérieure. La troisième denture peut également être intérieure ou extérieure.

Par titane, on entend de préférence tout matériau dont la teneur massique en titane est supérieure à 99%, voire supérieure à 99.5%. Par « alliage de titane », on entend de préférence tout autre matériau dont l'élément majoritaire ou dominant en masse est le titane, tel que par exemple le Titane Grade 2 ou le Titane Grade 5 (Ti6Al4V). Les résultats les plus satisfaisants se rapportent à l'usage du Titane Grade 5.

Dans le premier mode de réalisation, le mobile 10 comporte plusieurs éléments d'obstacles faisant chacun partie d'un composant dudit mobile. Dans le deuxième mode de réalisation, le mobile est constitué par un seul et même composant prenant la forme d'un disque, à savoir, par exemple, un support indicateur venu de matière avec une couronne. Dans le deuxième mode de réalisation, le disque supporte ou constitue les différents éléments d'obstacle.

Quel que soit le cas, un élément d'obstacle comprend au moins un élément destiné à recevoir une action de contact pour entraîner le mobile et/ou destiné à transmettre une action de contact pour entraîner un autre élément. Un élément d'obstacle peut aussi être destiné à recevoir une action de contact d'indexation du mobile, par exemple, par le biais d'un sautoir d'indexation. Un élément d'obstacle comprend donc de préférence au moins un levier mobile ou une dent ou un ensemble de dents, soit une denture.

Le mobile comprend au moins un élément d'obstacle réalisé en titane.

Le mobile peut notamment comprendre deux ou trois éléments d'obstacle réalisés en titane.

Par ailleurs, quel que soit le mode de réalisation ou la variante, un ou plusieurs éléments d'obstacle peuvent être rapportés sur le reste du mobile, notamment sur un composant du mobile assurant une autre fonction que celle assurée par l'élément d'obstacle, notamment sur la couronne ou sur le support.

Alternativement ou complémentairement, quel que soit le mode de réalisation ou la variante, un ou plusieurs éléments d'obstacle peuvent être venus de matière ou être monoblocs avec le reste du mobile ou avec un composant du mobile assurant une autre fonction que celle assurée par l'élément d'obstacle, notamment avec la couronne ou avec le support.

Quel que soit le mode de réalisation ou la variante, n'importe lequel des premier, deuxième et troisième éléments d'obstacles peut être réalisé par une denture intérieure ou par une denture extérieure ou n'importe lesquels des premier, deuxième et troisième éléments d'obstacles peuvent être réalisés chacun par une denture intérieure ou par une denture extérieure.

Selon différentes variantes, le mobile peut être monobloc ou être constitué par un assemblage de différents composants.

Il est donc possible d'optimiser un mécanisme de calendrier, en particulier un mécanisme de calendrier annuel, semi-perpétuel ou perpétuel, en proposant un mobile de calendrier dont au moins une portion, notamment au moins une denture, en particulier au moins une denture d'un mobile de calendrier, destinée à coopérer par contact avec un mobile entraîneur et/ou un sautoir est faite en titane ou en alliage de titane. Un tel matériau a, en effet, pour avantage de présenter une faible masse volumique tout en présentant une dureté adéquate pour le bon fonctionnement du calendrier, c'est-à-dire une dureté de surface fonctionnelle adéquate pour recevoir des actions de contact, en particulier des actions de contact ponctuelles, dont l'intensité permet l'entraînement du mobile. Préférentiellement, un tel matériau n'est ni revêtu, ni durci en surface. La faible masse volumique permet de minimiser l'inertie du mobile afin de permettre son entraînement tout en limitant l'énergie requise à fournir par le mobile entraîneur.

## Revendications

1. Mobile (10) horloger d'indication des quantièmes, le mobile ayant sensiblement la forme d'un disque ou le mobile ayant sensiblement la forme d'une couronne de disque, le mobile comprenant au moins un premier élément d'obstacle (1a, 2a, 3a) destiné à recevoir une action de contact d'entraînement du mobile et/ou destiné à transmettre une action de contact d'entraînement du mobile, le premier élément d'obstacle étant en titane ou en alliage de titane, le premier élément d'obstacle comprenant ou étant une première denture (1a).

2. Mobile selon la revendication 1, **caractérisé en ce que** le premier élément d'obstacle comprend ou est une première denture d'au moins 7 dents, en particulier une première denture de 12 dents ou de 14 dents ou de 31 dents et/ou une première denture prévue pour coopérer avec un premier doigt entraîneur toutes les heures, voire toutes les 24 heures.

3. Mobile selon l'une des revendications précédentes, **caractérisé en ce que** le mobile comprend un deuxième d'obstacle et **en ce que** le deuxième élément d'obstacle comprend ou est une deuxième denture (2a), notamment une deuxième denture d'une dent ou de quatre dents ou de cinq dents et/ou une deuxième denture prévue pour coopérer avec un deuxième doigt entraîneur à la fin d'au moins certains mois de moins de 31 jours.

4. Mobile selon la revendication 3, **caractérisé en ce que** la deuxième denture est fixe relativement au reste du mobile ou **en ce que** la deuxième denture est déplaçable par rapport au reste du mobile, notamment déplaçable en rotation par rapport au reste du mobile ou déplaçable par rapport au reste du mobile de sorte à pouvoir être escamotée.

5. Mobile selon l'une des revendications précédentes, **caractérisé en ce que** le mobile comprend un troisième d'obstacle et **en ce que** le troisième élément d'obstacle comprend ou est une troisième denture (3a), notamment une troisième denture prévue pour entraîner un indicateur et/ou une came des mois.

6. Mobile selon l'une des revendications précédentes, **caractérisé en ce que** le mobile comprend plusieurs éléments d'obstacles (1a, 2a, 3a) disposés sur plusieurs niveaux ou selon plusieurs plans parallèles relativement à un axe (A1) de rotation du mobile.

7. Mobile selon l'une des revendications précédentes, **caractérisé en ce que** le mobile est monobloc.

8. Mobile selon la revendication précédente, **caractérisé en ce que** le mobile comprend un support (3) portant des informations horaires ou dérivées de l'heure, notamment des informations numériques et/ou alphabétiques, le support étant monobloc avec une couronne (1).

9. Mobile selon l'une des revendications 1 à 6, **caractérisé en ce que** le mobile est un assemblage de composants (1, 3).

10. Mobile selon la revendication précédente, **caractérisé en ce que** le mobile comprend un support (3) portant des informations horaires ou dérivées de l'heure, notamment des informations numériques et/ou alphabétiques, le support étant rapporté, notamment par vissage, sur une couronne (1) ou le support étant monobloc avec la couronne.

11. Mobile selon l'une des revendications précédentes, **caractérisé en ce que** le mobile comprend une portion de guidage, notamment une portion de guidage en rotation du mobile, cette portion étant revêtue d'un matériau anti-friction, notamment un lubrifiant et/ou un revêtement comme du PTFE, et/ou **en ce que** l'au moins un des éléments d'obstacle est obtenu par découpe laser ou par découpe jet d'eau et/ou **en ce que** chaque élément d'obstacle est rapporté sur le reste du mobile ou venu de matière avec un composant du mobile, notamment une couronne ou un support.

12. Système horloger (100), notamment système de calendrier horloger, comprenant un mobile selon l'une des revendications précédentes.

13. Système horloger (100) selon la revendication précédente, **caractérisé en ce que** le système comprend un premier doigt d'entraînement de la première denture, le premier doigt étant en acier, notamment en un acier de décolletage ou un acier martensitique durci et/ou **en ce que** le mobile comprend une deuxième denture et le système comprend un deuxième doigt d'entraînement de la deuxième denture, le deuxième doigt étant en acier, notamment en un acier de décolletage ou un acier martensitique durci.

14. Mouvement horloger (200) comprenant un mobile selon l'une des revendications 1 à 11 et/ou un système selon l'une des revendications 12 et 13.

15. Pièce d'horlogerie (300), notamment montre bracelet, comprenant un mobile selon l'une des revendications 1 à 11 et/ou un système selon l'une des revendications 12 et 13 et/ou un mouvement selon la revendication précédente.

## Patentansprüche

1. Uhrendrehteil (10) zur Datumsanzeige, wobei der Drehteil im Wesentlichen die Form einer Scheibe aufweist oder der Drehteil im Wesentlichen die Form eines Scheibenkranzes aufweist, wobei der Drehteil mindestens ein erstes Hinderniselement (1a, 2a, 3a) umfasst, das dazu bestimmt ist, eine Kontaktaktion zum Antrieb des Drehteils zu empfangen und/oder dazu bestimmt ist, eine Kontaktaktion zum Antrieb des Drehteils zu übertragen, wobei das erste Hinderniselement aus Titan oder aus Titanlegierung besteht, wobei das erste Hinderniselement eine erste Zahnung (1a) umfasst oder ist.

2. Drehteil nach Anspruch 1, **dadurch gekennzeichnet, dass** das erste Hinderniselement eine erste Zahnung mit mindestens 7 Zähnen umfasst oder ist, insbesondere eine erste Zahnung mit 12 Zähnen oder mit 14 Zähnen oder mit 31 Zähnen, und/oder eine erste Zahnung, die dafür vorgesehen ist, jede Stunde oder auch alle 24 Stunden mit einem ersten Antriebsfinger zusammenzuwirken.

3. Drehteil nach einem der vorhergehenden Ansprüche, **dadurch gekennzeichnet, dass** der Drehteil ein zweites Hinderniselement umfasst, und dadurch, dass das zweite Hinderniselement eine zweite Zahnung (2a) umfasst oder ist, insbesondere eine zweite Zahnung mit einem Zahn oder mit vier Zähnen oder mit fünf Zähnen, und/oder eine zweite Zahnung, die dafür vorgesehen ist, am Ende wenigstens einiger Monate mit weniger als 31 Tagen mit einem zweiten Antriebsfinger zusammenzuwirken.

4. Drehteil nach Anspruch 3, **dadurch gekennzeichnet, dass** die zweite Zahnung feststehend relativ zum Rest des Drehteils ist, oder dadurch, dass die zweite Zahnung bewegbar in Bezug auf den Rest des Drehteils ist, insbesondere rotatorisch bewegbar in Bezug auf den Rest des Drehteils oder derart bewegbar in Bezug auf den Rest des Drehteils, dass sie eingezogen werden kann.

5. Drehteil nach einem der vorhergehenden Ansprüche, **dadurch gekennzeichnet, dass** der Drehteil ein drittes Hindernis umfasst, und dadurch, dass das dritte Hinderniselement eine dritte Zahnung (3a) umfasst oder ist, insbesondere eine dritte Zahnung, die dafür vorgesehen ist, eine Monatsanzeige und/oder eine Monatskurvenscheibe anzutreiben.

6. Drehteil nach einem der vorhergehenden Ansprüche, **dadurch gekennzeichnet, dass** der Drehteil mehrere Hinderniselemente (1a, 2a, 3a) umfasst, die auf mehreren Niveaus oder entlang mehrerer paralleler Ebenen in Bezug auf eine Drehachse (A1) des Drehteils angeordnet sind.

7. Drehteil nach einem der vorhergehenden Ansprüche, **dadurch gekennzeichnet, dass** der Drehteil aus einem Stück besteht.

8. Drehteil nach dem vorhergehenden Anspruch, **dadurch gekennzeichnet, dass** der Drehteil einen Träger (3) umfasst, der Uhrzeitinformationen oder von der Uhrzeit abgeleitete Informationen trägt, insbesondere numerische und/oder alphabetische Informationen, wobei der Träger mit einem Kranz (1) aus einem Stück besteht.

9. Drehteil nach einem der Ansprüche 1 bis 6, **dadurch gekennzeichnet, dass** der Drehteil ein Zusammenbau von Komponenten (1, 3) ist.

10. Drehteil nach dem vorhergehenden Anspruch, **dadurch gekennzeichnet, dass** der Drehteil einen Träger (3) umfasst, der Uhrzeitinformationen oder von der Uhrzeit abgeleitete Informationen trägt, insbesondere numerische und/oder alphabetische Informationen, wobei der Träger, insbesondere durch Verschraubung, an einem Kranz (1) angebracht ist oder der Träger mit dem Kranz aus einem Stück besteht.

11. Drehteil nach einem der vorhergehenden Ansprüche, **dadurch gekennzeichnet, dass** der Drehteil einen Führungsabschnitt umfasst, insbesondere einen Abschnitt zur Drehführung des Drehteils, wobei dieser Abschnitt mit einem Antifriktionsmaterial beschichtet ist, insbesondere einem Schmiermittel und/oder einem Überzug wie etwa aus PTFE, und/oder dadurch, dass mindestens eines der Hinderniselemente durch Laserschneiden oder durch Wasserstrahlschneiden erhalten wird, und/oder dadurch, dass jedes Hinderniselement am Rest des Drehteils angebracht ist oder mit einer Komponente des Drehteils, insbesondere einem Kranz oder einem Träger, stoffschlüssig verbunden ist.

12. Uhrsystem (100), insbesondere Uhrkalendersystem, welches einen Drehteil nach einem der vorhergehenden Ansprüche umfasst.

13. Uhrsystem (100) nach dem vorhergehenden Anspruch, **dadurch gekennzeichnet, dass** das System einen ersten Antriebsfinger der ersten Zahnung umfasst, wobei der erste Finger aus Stahl besteht, insbesondere aus einem Automatenstahl oder einem gehärteten martensitischen Stahl, und/oder dadurch, dass der Drehteil eine zweite Zahnung umfasst und das System einen zweiten Antriebsfinger der zweiten Zahnung umfasst, wobei der zweite Finger aus Stahl besteht, insbesondere aus einem Automatenstahl oder einem gehärteten martensitischen Stahl.

14. Uhrwerk (200), welches einen Drehteil nach einem der Ansprüche 1 bis 11 und/oder ein System nach einem der Ansprüche 12 und 13 umfasst.

15. Uhr (300), insbesondere Armbanduhr, welche einen Drehteil nach einem der Ansprüche 1 bis 11 und/oder ein System nach einem der Ansprüche 12 und 13 und/oder ein Uhrwerk nach dem vorhergehenden Anspruch umfasst.

## Claims

1. A timepiece calendar mobile (10) indicating the date, the mobile having substantially the shape of a disk or the mobile having substantially the shape of a disk ring, the mobile comprising at least one first obstacle element (1a, 2a, 3a) intended to receive a driving contact action driving the calendar mobile and/or intended to transmit a driving contact action from the calendar mobile, the first obstacle element being made of titanium or of titanium alloy, the first obstacle element comprising or being a first set of teeth (1a).

2. The mobile as claimed in claim 1, wherein the first set of at least 7 teeth, in particular a first set of 12 teeth or of 14 teeth or of 31 teeth, and/or a first set of teeth designed to cooperate with a first driving finger every hour, or even every 24 hours.

3. The mobile as claimed in any one of the preceding claims, wherein the mobile comprises a second obstacle element and wherein the second obstacle element comprises or is a second set of teeth (2a), in particular a second set of teeth comprising one tooth or four teeth or five teeth and/or a second set of teeth designed to cooperate with a second driving finger at the end of at least some months with fewer than 31 days.

4. The mobile as claimed in claim 3, wherein the second set of teeth is fixed relative to the rest of the mobile or the second set of teeth is movable relative to the rest of the mobile, in particular movable in rotation relative to the rest of the mobile or movable relative to the rest of the mobile so as to be retractable.

5. The mobile as claimed in any one of the preceding claims, wherein the mobile comprises a third obstacle element and the third obstacle element comprises or is a third set of teeth (3a), in particular a third set of teeth designed to drive a month cam and/or indicator.

6. The mobile as claimed in any one of the preceding claims, wherein the mobile comprises a plurality of obstacle elements (1a, 2a, 3a) disposed on a plurality of levels or in a plurality of parallel planes relative to a rotation axis (A1) of the mobile.

7. The mobile as claimed in any one of the preceding claims, wherein the mobile is made in one piece.

8. The mobile as claimed in the preceding claim, wherein the mobile comprises a support (3) bearing time information or information derived from the time, in particular numeric and/or alphabetic information, the support being integral with a ring (1).

9. The mobile as claimed in any one of claims 1 to 6, wherein the mobile is an assembly of components (1, 3).

10. The mobile as claimed in the preceding claim, wherein the mobile comprises a support (3) bearing time information or information derived from the time, in particular numeric and/or alphabetic information, the support being attached, in particular screwed, to a ring (1) or the support being integral with the ring.

11. The mobile as claimed in any one of the preceding claims, wherein the mobile comprises a guide portion, in particular a mobile rotation guide portion, this portion being covered with an anti-friction material, in particular a lubricant and/or a coating like PTFE, and/or wherein the at least one of the obstacle elements is obtained by laser cutting or by waterjet cutting and/or each obstacle element is attached to the rest of the mobile or made in one piece with a component of the mobile, in particular a ring or a support.

12. A clock system (100), in particular a clock calendar system, comprising a mobile as claimed in any one of the preceding claims.

13. The clock system (100) as claimed in the preceding claim, wherein the system comprises a first finger driving the first set of teeth, the first finger being made of steel, in particular of a free-cutting steel or a hardened martensitic steel and/or wherein the mobile comprises a second set of teeth and the system comprises a second finger driving the second set of teeth, the second finger being made of steel, in particular of a free-cutting steel or a hardened martensitic steel.

14. A clock movement (200) comprising a mobile as claimed in any one of claims 1 to 11 and/or a system as claimed in either one of claims 12 and 13.

15. A timepiece (300), in particular a wristwatch, comprising a mobile as claimed in any one of claims 1 to 11 and/or a system as claimed in either one of claims 12 and 13 and/or a movement as claimed in the preceding claim.
